# EUROPÄISCHE PATENTSCHRIFT

(11) **EP 1 157 313 B1**
(45) Veröffentlichungstag und Bekanntmachung des Hinweises auf die Patenterteilung: **02.07.2003**
(21) Anmeldenummer: 00912521.2
(22) Anmeldetag: 28.02.2000
(51) Int. Cl.: G05B 19/401

(54) **VERFAHREN ZUR FESTSTELLUNG DER ABWEICHUNGEN DER GEOMETRISCHEN ABMESSUNGEN UND/ODER DER LAGE EINES OBJEKTS VON VORGEBBAREN SOLLWERTEN DER GEOMETRISCHEN ABMESSUNGEN UND/ODER DER LAGE DES OBJEKTS**
METHOD FOR DETERMINING THE DEVIATIONS IN THE GEOMETRIC MEASUREMENTS AND/OR THE POSITION OF AN OBJECT FROM DEFINED DESIRED VALUES OF SAID GEOMETRIC DIMENSIONS AND/OR POSITION OF THE OBJECT
PROCEDE PERMETTANT DE DETERMINER L'ECART DE DIMENSIONS GEOMETRIQUES ET/OU DE LA POSITION D'UN OBJET PAR RAPPORT A DES VALEURS THEORIQUES PREDETERMINABLES DES DIMENSIONS GEOMETRIQUES ET/OU DE LA POSITION DE L'OBJET CONCERNE

(30) Priorität: 26.02.1999 DE 19908706
(43) Veröffentlichungstag der Anmeldung: 28.11.2001
(73) Patentinhaber: Werth Messtechnik GmbH, 35394 Giessen (DE)
(72) Erfinder: HAERTIG, Frank, D-35415 Pohlheim (DE); CHRISTOPH, Ralf, D-35641 Schöffengrund (DE)
(74) Vertreter: Stoffregen, Hans-Herbert, Dr. Dipl.-Phys.
(86) Internationale Anmeldenummer: EP0001653
(87) Internationale Veröffentlichungsnummer: WO00050965

(56) Entgegenhaltungen:
- EP-A- 0 291 553
- EP-A- 0 392 194
- DE-A- 3 120 344
- DE-A- 3 612 904
- DE-A- 3 725 347
- DE-A- 3 830 534
- US-A- 5 907 405
- PATENT ABSTRACTS OF JAPAN vol. 011, no. 340 (P-634), 7. November 1987 (1987-11-07) & JP 62 121590 A (HITACHI LTD), 2. Juni 1987 (1987-06-02)

## Beschreibung

Die Erfindung bezieht sich auf ein Verfahren zur Feststellung der Abweichungen der gemessenen geometrischen Abmessungen und/oder der Lage eines Objekts von vorgebbaren Sollwerten der geometrischen Abmessungen und/oder der Lage des Objekts. Die Objekte bzw. Körper oder Gegenstände können verschiedene Dimensionen haben.

Es sind Koordinatenmessmaschinen bekannt, mit denen Werkstücke automatisch vermessen werden. Die Werkstücke werden bei diesen Verfahren kontinuierlich, z. B. mittels eines Taststifts, abgetastet. Die gewonnenen Messwerte werden dann weiterverarbeitet (DE 35 23 188 Al). Auch optische Messsysteme werden zur Feststellung der Koordinatenwerte von z. B. dreidimensionalen Körpern eingesetzt. Zur berührungslosen Abtastung wird ein optischer Messkopf verwendet, dessen Bewegungen gesteuert werden und dessen Ausgangssignale bei der Abtastung des jeweiligen Objekts in einem Rechner verarbeitet werden. Die Messwerte werden mittels Software analysiert. Die Analyse beinhaltet z. B. den Soll-Ist-Vergleich der Abmessungen des vermessenen Körpers. Die Ergebnisse werden beispielsweise für die Qualitätskontrolle verwendet. Es werden auf die vorstehend angegebene Art auch Freiform- Oberflächen vermessen und mit vorgebbaren Soll-Oberflächen verglichen. Zur Feststellung der Abweichungen zwischen Soll- und Istwerten werden die Messwerte in die Sollgeometrien eingepasst. Nach der Einpassung werden die Abweichungen bestimmt. Anhand der Abweichungen lässt sich durch Vergleich mit den vorgebbaren Toleranzen der Soll-Oberflächen feststellen, ob die Körper bzw. Objekte innerhalb der Toleranzgrenzen liegen bzw. an welchen Stellen Toleranzgrenzen überschritten werden. Aufgrund einer Einpassung in die Sollgeometrie können funktionsgerechte Toleranzzonen nicht berücksichtigt werden.

Einpassung ist ein in der Messtechnik bekanntes Verfahren, bei dem durch Verschiebung und/oder Drehung einer Soll- und einer Ist-Kontur die beiden Konturen "möglichst gut" in Übereinstimmung gebracbt werden. Es wird in diesem Zusammenhang auf eine Website im Internet hingewiesen, die zwar zur Zeit abrufbar ist, aber auf ein 1994 bis 1997, also vor dem Anmeldetag, durchgeführtes Projekt Bezug nimmt. Zum weiteren Nachweis ist ein Sonderdruck 10/96 aus "Kontrolle" mit dem Aufsatz "Konturscanning" von W. Grebe beigefügt. Auf der letzten Seite des Sonderdrucks ist im Abschnitt "Datenauswertung" und in Abb. 7 das Scanning-Bestfit-Verfahren bzw. die Besteinpassung beschrieben.

Mittels der Einpassung wird somit die Lage einer gemessenen Ist-Kontur hinsichtlich bestimmter Optimierungsparameter so durch Rotation und/oder Translation verändert dass sie der Lage einer Soll-Kontur entsprechend der vordefinierten Parameter mehr oder weniger gut entspricht.

Allgemeines Ziel ist es, eine Übereinstimmung der Lage von Soll und Ist so zu erreichen, dass die Abweichungen zwischen beiden Konturen minimal sind. Durch einen Rechenvorgang wird in diesem Sinne die optimale Lage zwischen Soll und Ist ermittelt. Dies ist kein Schönrechnen von Messwerten, sondern entspricht dem praktischen Einsatzfall und zeigt die wirklichen Abweichungen zwischen Soll und Ist, Form und Maß, sowie bei Protokollierung der Rotations- und Verschiebeparameter und auch die wirkliche Lage zwischen beiden.

Bei den bekannten Einpassungs-Verfahren, zu dem z. B. das "Werth Bestfit"-Verfahren gehört, wird nur eine Lageoptimierung von Soll- und Ist-Kontur durchgeführt.

Aus der DE 37 25 347 A 1 ist ein computerintegriertes Messsystem bekannt, um Abweichungen gemessener geometrischer Abmessungen eines Objektes von vorgebbaren Sollwerten der geometrischen Abmessungen des Objekts festzustellen. Dabei wird vor der Bestimmung der Abweichungen eine Anpassung der Sollwerte der geometrischen Abmessungen des Objekts unter Berücksichtigung der vorgebbaren Toleranzwerte der Sollwerte durchgeführt.

Der Erfindung liegt das Problem zugrunde, ein Verfahren zur Feststellung der Abweichungen der gemessenen geometrischen Abmessungen und/oder der Lage eines Objekts von vorgebbaren Sollwerten der geometrischen Abmessungen und/oder Lage des Objekts zu entwickeln, bei dem durch eine Verbesserung der Einpassung der Messwerte eindeutiger festgestellt werden kann, ob bei dem vermessenen Objekt vorgebbare Grenzwerte der Abmessungen und/oder der Lage überschritten werden, dass also funktionsgerechte Toleranzzonen berücksichtigt werden. Das Problem wird bei einem Verfahren der eingangs beschriebenen Art erfindungsgemäß im Wesentlichen dadurch gelöst, dass vor der Bestimmung der Abweichungen eine Einpassung der Messwerte der geometrischen Abmessungen des jeweiligen Objekts und/oder der Lage des Objekts an die Sollwerte unter Berücksichtigung der vorgebbaren Toleranzen der Sollwerte der geometrischen Abmessungen und/oder der Lage des Objekts durchgeführt werden. Der Erfindung liegt das Prinzip zugrunde, die Einpassung der Messwerte, die im folgenden auch als Istwerte bezeichnet sind, an die Sollwerte des Objekts so vorzunehmen, dass keine der möglichst wenigen Messwerte ausserhalb des Toleranzfeldes der Messwerte liegen, obwohl innerhalb des Toleranzfelds die Abstände zu den Sollwerten nicht minimal sein müssen. Mit dem erfindungsgemäßen Verfahren wird die Qualitätskontrolle bei der Vermessung von Objekten und dem Vergleich der Messwerte mit vorgegebenen Sollwerten entscheidend verbessert. Es werden nämlich nach der Einpassung bei der Prüfung weniger Toleranzüberschreitungen festgestellt und gemeldet, wenn das jeweilige Objekt optimal innerhalb des Toleranzfeldes liegt. Die minimale Abweichung der Messwerte von den vorgegebenen Sollwerten ist bei der Einpassung ein Kriterium, das unter Bezug auf die Abweichung wenigstens eines Teils der Messwerte auf die den jeweiligen Sollwerten zugeordneten Toleranzwerte erfindungsgemäß modifiziert wird. Es können dabei im Vergleich mit der Einpassung, die nur auf die Sollwerte gerichtet ist, andere Abweichungen zwischen Soll- und Istwerten auftreten. Nach der Einpassung werden die Istwerte auf ihre Lage in Bezug auf die Sollwerte und deren zugeordnete Toleranzen in üblicher Weise geprüft.

Mit der Erfindung werden vorgebbare Toleranzen zu einzelnen Konturabschnitten der Soll-Kontur bei der Einpassung berücksichtigt. Der Einpassvorgang, der in dem z. B. mittels Rechner vorgenommenen Rotieren und Schieben besteht, liefert dann ein Ergebnis, das zur Prüfung der Passfähigkeit der Ist-Kontur besonders geeignet ist.

Bei einer zweckmäßigen Ausführungsform ist vorgesehen, dass die Messwerte als Istwerte den entsprechenden Sollwerten punktweise zugeordnet werden, dass jeweils die Differenzen zwischen den Istwerten und den den entsprechenden Sollwert-Punkten zugeordneten Toleranzen bestimmt werden und dass die Einpassung in Bezug auf keine oder minimale Abweichung der Istwerte von den Toleranzen erfolgt. Unter Toleranzen sind hierbei die Grenzwerte am jeweiligen Sollwert, d. h. die Differenz zwischen dem genauen Sollwertpunkt und dem zugeordneten Grenzwert der Toleranz zu verstehen, der vorgegeben wird und aus einem bestimmten Grund, z. B. als Qualitätskriterium, nicht überschritten werden darf.

Insbesondere wird die Einpassung der Istwerte in das jeweils vorgebbare Toleranzfeld nach der Gauß-Methode durchgeführt. Auf diese Weise wird eine gute Einpassung erreicht.

Eine andere günstige Ausführungsform zur Einpassung sieht eine nichtlineare Optimierung zwischen Istwerten und Toleranzwerten vor.

Die erfindungsgemäße Einpassung wird zweckmäßigerweise bei Objekten eingesetzt, die im dreidimensionalen Raum eine oder mehrere beliebig orientierte Konturen bzw. Flächen aufweisen. Es können im Raum bei den Objekten eine oder mehrere Regelgeometrien oder Freiflächen vorhanden sein. Die Flächen bzw. Oberflächen können unterschiedliche Toleranzzonen aufweisen.

Es ist zweckmäßig, wenn nach der Einpassung die Abweichungen von den Toleranzen berechnet und numerisch angegeben und/oder grafisch dargestellt werden. Das erfindungsgemäße Verfahren eignet sich insbesondere für die Ausrichtung bei dreidimensionalen Koordinatenmessungen.

Weitere Einzelheiten, Vorteile und Merkmale der Erfindung ergeben sich nicht nur aus den Ansprüchen und den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: in schematischer Form ein Teilstück eines Objekts mit den Konturen des Objekts zugeordneten Sollwerten und Toleranzen und Messwerten, die auf die Konturen als Sollwerte optimiert bzw. eingepasst sind und
- Fig. 2: in schematischer Form Konturen des in Fig. 1 dargestellten Teilstücks mit zugeordneten Toleranzen und erfindungsgemäßer Optimierung bzw. Einpassung unter Berücksichtigung der Toleranzen.

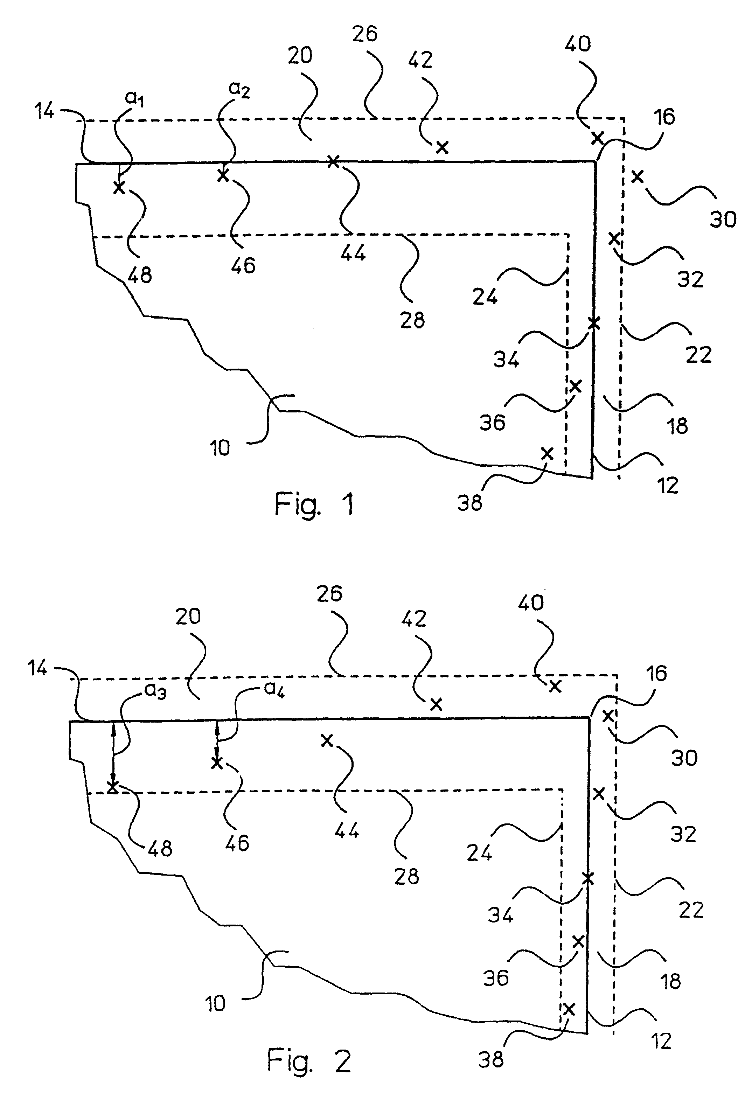

Ein Objekt 10, z. B. ein Werkstück, hat als Sollwerte zwei rechtwinklig zueinander verlaufende Oberflächen 12, 14, die an einer Kante 16 aneinandergrenzen. Die Lage der Sollwerte 12, 14 und der Kante 16 wird vorgegeben. Neben den z. B. in Form von Koordinaten bzw. einer Gleichung oder Formel vorgegebenen Sollwerten der Oberflächen 12, 14 und der Kante 16 werden diesen Sollwerten Toleranzen zugeordnet. Für jede Oberfläche 12, 14 sind z. B. unterschiedliche Toleranzfelder 18, 20 vorgesehen, deren Grenzen bzw. Abstände zu den Sollwerten der Oberflächen in Fig. 1 mit 22 und 24 bzw. 26 und 28 bezeichnet sind. Die Abstände 22 der beiderseits der Oberfläche 12 vorgesehenen Toleranzgrenzen sind z. B. gleich groß. Die Abstände 26 und 28 der beiderseits der Oberfläche 14 vorgesehenen Toleranzgrenzen sind z. B. verschieden groß.

Durch die Abtastung der Oberfläche eines realen Objekts mit einem Koordinatenmessgerät auf an sich bekannte Weise werden eine Reihe von Messwerten gewonnen, die z. B. in digitaler Form vorliegen oder in diese umgewandelt werden. Diese können auf die Sollwerte 12, 14 in der Weise optimiert werden, dass die Messwerte und damit die diesen entsprechenden Oberflächen des realen Objekts zu den Sollwerten möglichst kleine Abstände haben.

In Fig. 1 sind fünf Messwerte 30, 32, 34, 36, 38 die dem Oberflächen-Sollwert 12 zugeordnet sind, und fünf Messwerte 40, 42, 44, 46, 48 dargestellt, die dem Oberflächen-Sollwert 14 zugeordnet sind. Die Einpassung der Messwerte 30 bis 48 ist so erfolgt, dass die Messwerte, die der jeweiligen realen Oberfläche entsprechen, unter Berücksichtigung der Oberflächenform möglichst geringe Abstände von den Sollwerten haben. Nach der Einpassung werden die jeweiligen Messwerte auf ihre Lage gegenüber dem Toleranzfeld in üblicher Weise geprüft. Bei dem in Fig. 1 gezeigten Beispiel ergibt sich, dass die Messwerte 30 und 38 ausserhalb des Toleranzfelds 18 liegen. Dies bedeutet, dass bei der vorstehend beschriebenen Anpassungsmethode im Falle einer Qualitätsprüfung des Objekts eine unzulässige Abweichung festgestellt und gemeldet würde.

Bei der erfindungsgemäßen Methode zur Einpassung der Messwerte werden die Toleranzfelder bereits während der Einpassung berücksichtigt. Die Einpassung wird so vorgenommen, dass die Istwerte möglichst innerhalb der Toleranzfelder, z. B. 18 und 22 liegen. Die Einpassung der gemessenen Istwerte, z. B. der Werte 30 bis 48 in die Toleranzfelder 18 und 20, wird nach der Gauß-Methode oder einer nichtlinearen Optimierung durchgeführt. Dabei wird punktweise vorgegangen, indem für die jeweiligen Sollwerte die Differenzen zwischen den Istwerten und den zu den Sollwerten gehörigen Toleranzgrenzen 22 bzw. 28 bestimmt werden. Diese Differenzen werden vorzeichenbehaftet gebildet, z. B. negativ = Punkt innerhalb der Toleranz, positiv = Punkt außerhalb der Toleranz. Diese Differenzen werden nach der Gauß-Metode oder der nichtlinearen Optimierung verarbeitet. In Fig. 2 ist die Lage der Istwerte 26 bis 48 aufgrund der erfindungsgemässen Einpassung dargestellt. Gleiche Elemente in den Fig. 1 und 2 sind dabei durch die gleichen Bezugsziffern bezeichnet. Durch die erfindungsgemäße Optimierung der Einpassung liegen alle Istwerte 30 bis 48 innerhalb der Toleranzfelder 18 und 20. Zwar sind die Abstände einiger Istwerte von den zugeordneten Sollwerten zum Teil größer als bei dem in Zusammenhang mit der Fig. 1 beschriebenen Verfahren. Beispielsweise sind die Abstände a₃ und a₄ der Istwerte 48 und 46 gemäß Fig. 2 von den durch die Oberfläche 14 vorgegebenen genauen Sollwerten größer als die Abstände a₁ und a₂ der Istwerte 48 und 46 gemäß Fig. 1 von den zugeordneten Sollwerten der Oberfläche 14. Jedoch liegen gemäß Fig. 2 keine Istwerte ausserhalb der Toleranzfelder.

Bei dem in Zusammenhang mit Fig. 1 beschriebenen Verfahren würde daher bei der Prüfung auf Abweichungen eine Toleranzüberschreitung festgestellt, weil die gemessenen Oberflächen- Istwerte nicht innerhalb der Toleranzfelder liegen. Dies wird durch das erfindungsgemäße Verfahren vermieden. Mit dem erfindungsgemäßen Verfahren wird somit gewährleistet, dass bei der Qualitätsprüfung anhand der Messwerte eines Koordinatenmessgeräts nicht Objekte als fehlerhaft erfasst werden, die bei einer nach dem Stand der Technik erfolgten Einpassung auf die Sollgeometrie als fehlerhaft bezeichnet werden, obwohl keine Fehler bzw. keine Messwerte ausserhalb der Toleranzen liegen. Das erfindungsgemäße Verfahren eignet sich für Objekte mit beliebiger Orientierung der Flächen im Raum. Die Flächen können regelgeometrisch oder Freiflächen sein. Für die verschiedenen Flächen oder Teilflächen können unterschiedliche Toleranzfelder vorgegeben werden. Die Abweichungen, insbesondere bei Überschreitung der Toleranzen, werden numerisch angegeben und grafisch dargestellt.

## Patentansprüche

1. Verfahren zur Feststellung der Abweichungen der gemessenen geometrischen Abmessungen und/oder der Lage eines Objekts von vorgebbaren Sollwerten der geometrischen Abmessungen und/oder der Lage des Objekts,
**dadurch gekennzeichnet,**
**dass** vor der Bestimmung der Abweichungen eine Einpassung der Messwerte der geometrischen Abmessungen und/oder der Lage des Objekts an die Sollwerte unter Berücksichtigung der vorgebbaren Toleranzwerte der Sollwerte der geometrischen Abmessungen und/oder der Lage des Objekts durchgeführt wird.

2. Verfahren nach Anspruch 1,
**dadurch gekennzeichnet,**
**dass** die Messwerte als Istwerte den entsprechenden Sollwerten zugeordnet werden, dass jeweils die Differenzen zwischen den Istwerten und den den entsprechenden Sollwert-Punkten zugeordneten Toleranzen bestimmt werden und dass die Einpassung in Bezug auf keine oder minimale Überschreitung der Istwerte von den Toleranzen erfolgt.

3. Verfahren nach Anspruch 1 oder 2,
**dadurch gekennzeichnet,**
**dass** die Einpassung der Istwerte in das jeweils vorgebbare Toleranzfeld nach der Gauß-Methode durchgeführt wird.

4. Verfahren nach Anspruch 1 oder 2,
**dadurch gekennzeichnet,**
**dass** die Einpassung der Istwerte in das jeweils vorgebbare Toleranzfeld mit nichtlinearer Optimierung durchgeführt wird.

5. Verfahren nach zumindest einem der vorhergehenden Ansprüche,
**dadurch gekennzeichnet,**
**dass** das Objekt eine oder mehrere Konturen aufweist, die im Raum beliebig orientiert sind.

6. Verfahren nach zumindest einem der vorhergehenden Ansprüche,
**dadurch gekennzeichnet,**
**dass** das Objekt eine oder mehrere regelgeometrische Flächen und/oder Freiformflächen aufweist.

7. Verfahren nach zumindest einem der vorhergehenden Ansprüche,
**dadurch gekennzeichnet,**
**dass** ausserhalb der Toleranzfelder liegende Istwerte erfasst und die Abweichungen der Istwerte von den zugehörigen Toleranzfeldern bestimmt und numerisch dargestellt und/oder grafisch dargestellt werden.

8. Verfahren nach zumindest einem der vorhergehenden Ansprüche,
**gekennzeichnet**
**durch** die Ausrichtung des Objekts bei dreidimensionalen Koordinatenmessungen.

9. Verfahren nach zumindest Anspruch 1,
**dadurch gekennzeichnet,**
**dass** vor der Bestimmung der Abweichungen eine Lageoptimierung der Messwerte der geometrischen Abmessungen und/oder der Lage des Objekts an die Lage der Sollwerte unter Berücksichtigung der vorgebbaren Toleranzwerte der Sollwerte der geometrischen Abmessungen und/oder der Lage des Objekts durchgeführt wird.

## Claims

1. Method for determining the deviations in the measured geometric dimensions and/or position of an object from definable desired values of said geometric dimensions and/or position of the object,
**characterised in**
**that** before determining the deviations, the measured values of the geometric dimensions and/or the position of the object are adjusted to the desired values whilst taking into account the definable tolerance values of the desired values of the geometric dimensions and/or the position of the object.

2. Method according to Claim 1,
**characterised in**
**that** the measured values are attributed as actual values to the corresponding desired values, that the differences between the actual values and the tolerances attributed to the corresponding desired value points are determined, and that the adjustment is carried out in relation to zero or minimum deviation in the actual values from the tolerances.

3. Method according to Claim 1 or 2,
**characterised in**
**that** the adjustment of the actual values to each pre-definable tolerance field is carried out according to the Gaussian method.

4. Method according to Claim I or 2,
**characterised in**
**that** the adjustment of the actual values to each pre-definable tolerance field is carried out with non-linear optimization.

5. Method according to at least one of the preceding claims,
**characterised in**
**that** the object has one or more contours which are arbitrarily oriented in space.

6. Method according to at least one of the preceding claims,
**characterised in**
**that** the object has one or more ruled-geometric planes and/or free-form planes.

7. Method according to at least one of the preceding claims,
**characterised in**
**that** actual values outside the tolerance zones are registered and the deviations in the actual values from the attributed tolerance zones are determined and displayed numerically and/or graphically.

8. Method according to at least one of the preceding claims,
**characterised**
**by** the alignment of the object where three-dimensional coordinate measurements are used.

9. Method according to at least Claim 1,
**characterised in**
**that** before determining the deviations, a position optimization of the measured values of the geometric dimensions and/or the position of the object is carried out with respect to the position of the desired values whilst taking into account the definable tolerance values of the desired values of the geometric dimensions and/or the position of the object.

## Revendications

1. Procédé pour la détermination des écarts des dimensions géométriques mesurées et/ou de la position d'un objet par rapport à des valeurs de consigne prédéterminables des dimensions géométriques et/ou de la position de l'objet,
**caractérisé en ce qu'**
avant la détermination des écarts, on effectue un encadrage des valeurs mesurées des dimensions géométriques et/ou de la position de l'objet aux valeurs de consigne en tenant compte des tolérances prédéterminables des valeurs de consigne des dimensions géométriques et/ou de la position de l'objet.

2. Procédé selon la revendication 1,
**caractérisé en ce qu'**
on associe les valeurs mesurées en tant que valeurs réelles aux valeurs de consigne correspondantes, on détermine les différences entre les valeurs réelles et les tolérances associées aux points correspondants des valeurs de consigne et on effectue l'encadrage en prenant pour objectif un dépassement nul ou minime des valeurs réelles au-delà des tolérances.

3. Procédé selon la revendication 1 ou 2,
**caractérisé en ce que**
l'encadrage des valeurs réelles dans la marge de tolérance prédéterminable dans chaque cas considéré s'effectue par la méthode de Gauss.

4. Procédé selon la revendication 1 ou 2,
**caractérisé en ce que**
l'encadrage des valeurs réelles dans la marge de tolérance prédéterminable dans chaque cas considéré s'effectue par une optimisation non linéaire.

5. Procédé selon au moins une des revendications précédentes,
**caractérisé en ce que**
l'objet présente un ou plusieurs contours qui sont orientés de façon quelconque dans l'espace.

6. Procédé selon au moins une des revendications précédentes,
**caractérisé en ce que**
l'objet présente une ou plusieurs surfaces géométriques réglées et/ou surfaces de forme libre.

7. Procédé selon au moins une des revendications précédentes,
**caractérisé en ce qu'**
on détecte des valeurs réelles situées en dehors des marges de tolérance et les écarts des valeurs réelles par rapport aux marges de tolérance correspondantes sont déterminés et représentés numériquement et/ou représentés graphiquement.

8. Procédé selon au moins une des revendications précédentes,
**caractérisé par**
l'orientation de l'objet dans le cas de mesures de coordonnées tridimensionnelles.

9. Procédé selon au moins la revendication 1,
**caractérisé en ce qu'**
avant la détermination des écarts, on procède à une optimisation de la position des valeurs mesurées des dimensions géométriques et/ou de la position de l'objet à la position des valeurs de consigne en tenant compte des tolérances prédéterminables des valeurs de consigne des dimensions géométriques et/ou de la position de l'objet.
